# EUROPÄISCHE PATENTANMELDUNG

(11) **EP 1 762 636 A1**
(43) Veröffentlichungstag der Anmeldung: **14.03.2007**
(21) Anmeldenummer: 05405526.4
(22) Anmeldetag: 07.09.2005
(51) Int. Cl.: C23C 28/02, B23K 20/00, C22C 21/00

(54) **Verfahren zum Plattieren eines Profils aus einer Aluminiumlegierung**

(71) Anmelder: Alcan Technology & Management Ltd., 8212 Neuhausen am Rheinfall (CH)
(72) Erfinder: Schwellinger, Pius, 78250 Tengen (DE)

(57) **Zusammenfassung**

Bei einem Verfahren zum Aufbringen eines Plattierwerkstoffes aus Metall als Plattierschicht (24) auf die Oberfläche eines Profils (22) aus einer Aluminiumlegierung als Grundwerkstoff wird ein Bolzen (18) aus dem Grundwerkstoff und vor dem Bolzen (18) eine im wesentlichen den gleichen Querschnitt wie der Bolzen (18) aufweisende Scheibe (20) aus dem Plattierwerkstoff in den Rezipienten (10) einer Strangpresse eingeführt und der Bolzen (18) aus dem Grundwerkstoff zusammen mit der vorgelagerten Scheibe (20) aus dem Plattierwerkstoff durch die Öffnung (13) einer Matrize (12) zu einem plattierten Profil (26) verpresst. Mit dem Verfahren können Profile aus einer Aluminiumlegierung kostengünstig und auf einfache Art mit einer Plattierschicht aus Metall versehen werden. Ein besonderer Anwendungsbereich des Verfahrens liegt in der Herstellung plattierter Profile, bei denen der Grundwerkstoff aus einer lithiumhaltigen Aluminiumlegierung und der Plattierwerkstoff aus Reinaluminium oder einer lithiumfreien Aluminiumlegierung besteht. Derartige plattierte Profile werden bevorzugt in der Luftfahrt eingesetzt und sind insbesondere als Stringer zur Versteifung der Aussenhaut bei Flugzeugen geeignet.

## Beschreibung

Die Erfindung betrifft ein Verfahren zum Aufbringen eines Plattierwerkstoffes aus Metall als Plattierschicht auf die Oberfläche eines Profils aus einer Aluminiumlegierung als Grundwerkstoff.

In der Luftfahrt werden u.a. lithiumhaltige Aluminiumlegierungen eingesetzt. Lithium besitzt eine starke Affinität zu Sauerstoff und Wasserstoff. Die Oxidschicht des Aluminiums ist bei Anwesenheit von Lithium im Vergleich zu lithiumfreien Legierungen weniger stabil. Wärmebehandlungen bei erhöhter Temperatur, wie beispielsweise Lösungsglühen, führen deshalb im oberflächennahen Randbereich von Bauteilen zu starkem Abbrand der Legierungselemente Lithium und Magnesium und zur Aufnahme von Wasserstoff. Wird dieses Material geschweisst, bilden sich Poren, die die mechanischen Eigenschaften der Schweissverbindung stark beinträchtigen. In den meisten Fällen muss deshalb vor dem Einsatz des Materials eine etwa 100µm dicke Randzone abgetragen werden, was letztlich mit sehr hohen Kosten verbunden ist. Mit einer Plattierschicht aus Aluminium oder einer geeigneten Aluminiumlegierung kann der negative Einfluss des Lithiums weitgehend verhindert werden.

Im Automobilbau und in der Luftfahrt besteht zunehmend der Bedarf, insbesondere Profile aus hochfesten Aluminiumlegierungen mit anderen Metallen, wie beispielsweise Stahl oder Titanlegierungen, zu verbinden. Häufig sind hochfeste Aluminiumlegierungen Legierungen jedoch schlecht schweiss- oder lötbar. Auch hier kann dieses Problem durch Plattieren mit Aluminium oder einer geeigneten Aluminiumlegierung gelöst werden. Die Plattierschicht kann beispielsweise auch aus einem Lot bestehen.

Plattieren ist bei Blechen eine seit Jahrzehnten gängige Praxis. Bei AlZnMg- und A1Cu-Legierungen wird eine Plattierschicht hauptsächlich als Korrosionsschutz eingesetzt.

Der Erfindung liegt die Aufgabe zugrunde, ein Verfahren der eingangs genannten Art zu schaffen, mit welchem Profile aus einer Aluminiumlegierung kostengünstig und auf einfache Art mit einer Plattierschicht aus Metall versehen werden können.

Zur erfindungsgemässen Lösung der Aufgabe führt, dass ein Bolzen aus dem Grundwerkstoff und vor dem Bolzen eine im wesentlichen den gleichen Querschnitt wie der Bolzen aufweisende Scheibe aus dem Plattierwerkstoff in den Rezipienten einer Strangpresse eingeführt und der Bolzen aus dem Grundwerkstoff zusammen mit der vorgelagerten Scheibe aus dem Plattierwerkstoff durch die Öffnung einer Matrize zu einem plattierten Profil verpresst wird.

Ein besonderer Anwendungsbereich des erfindungsgemässen Verfahrens liegt in der Herstellung plattierter Profile, bei denen der Grundwerkstoff aus einer lithiumhaltigen Aluminiumlegierung und der Plattierwerkstoff aus Reinaluminium oder einer lithiumfreien Aluminiumlegierung besteht. Derartige plattierte Profile werden bevorzugt in der Luftfahrt eingesetzt und sind insbesondere als Stringer zur Versteifung der Aussenhaut bei Flugzeugen geeignet.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in

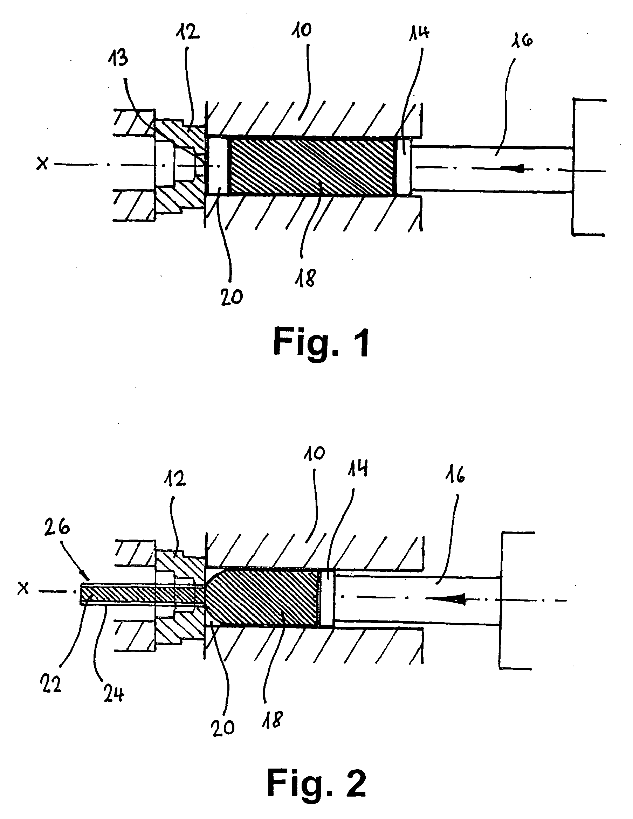

Fig. 1 und 2 einen Längsschnitt durch einen Teil einer Strangpresse in unterschiedlichen Verfahrensstadien.

Eine übliche Anlage zum direkten Strangpressen weist gemäss Fig. 1 einen Rezipienten 10 zur Aufnahme eines zu verpressenden Blocks oder Barrens 18 aus einem Grundwerkstoff auf. Der Barren 18 wird mittels eines Stempels 16 mit vorgesetzter Pressscheibe 14 in einer der Pressrichtung entsprechenden Bewegungsrichtung x des Stempels 16 aus dem Rezipienten 10 durch die Öffnung 13 einer Matrize 12 gepresst.

Wie in Fig. 1 gezeigt, ist im Rezipienten 10 zwischen dem Barren 18 aus dem Grundwerkstoff und der Matrize 14 eine im wesentlichen den gleichen Querschnitt wie der Bolzen 18 aufweisende Scheibe 20 aus einem Plattierwerkstoff angeordnet. Diese Scheibe 20 aus einem Plattierwerkstoff wird jeweils beim Bolzenwechsel vor dem Bolzen 18 des Grundwerkstoffes in den Rezipienten 10 eingeführt.

Beim Auspressen des Bolzens 18 mit der vorgelagerten Scheibe 20 aus dem Rezipienten 10 durch die Öffnung 13 der Matrize 12 entsteht gemäss Fig. 2 ein plattiertes Profil 26 entsprechend einem Profil 22 aus dem Grundwerkstoff, dessen Oberfläche mit einer Plattierschicht 24 aus dem Plattierwerkstoff versehen ist. Die Dicke der Plattierschicht 24 nimmt mit zunehmender Auspresslänge ab. Die Dicke der Scheibe 20 wird so gewählt, dass die Plattierschicht 24 bei vollständig ausgepresstem Bolzen 18 auf der Oberfläche des Profils 22 immer noch in der gewünschten Schichtdicke vorhanden ist.

Anstelle des in den Fig. 1 und 2 gezeigten, direkten Strangpressens kann auch indirekt gepresst werden. Grundsätzlich können zum Pressen Werkzeuge mit und ohne Vorkammer verwendet werden. Da jedoch beim Bolzenwechsel die Vorkammer vom Material des Grundwerkstoffes gereinigt werden muss und dies nur bei einfachen Vorkammern möglich ist, sind Werkzeuge mit einer Vorkammer nur bedingt zu empfehlen.

Je nach Anwendungsgebiet besteht der Grundwerkstoff aus einer Aluminiumlegierung, die bestimmten Anforderungen hinsichtlich mechanischer und weiterer Eigenschaften genügen muss. Beispiele für Grundwerkstoffe sind etwa lithiumhaltige Aluminiumlegierungen, wie sie u.a. in der Luftfahrt zur Herstellung von Stringern zur Versteifung der Aussenhaut bei Flugzeugen eingesetzt werden, oder Aluminiumlegierungen vom Typ AiMgSi, AIZnMg, AICuMg mit Anwendungen in der Luftfahrt und im Automobilbau.

Der Plattierwerkstoff besteht z.B. aus Reinaluminium oder aus einer Aluminiumlegierung und kann je nach Anwendungsbereich unterschiedliche Aufgaben erfüllen, z.B. als Korrosionsschutzschicht, zur Verbesserung der Schweiss- oder Lötbarkeit einer Aluminiumlegierung oder als Lot zur Verbindung mit anderen Aluminiumlegierungen oder anderen Metallen, wie z.B. Aufschweissen von Stahlband auf ein Profil für Stromschienenanwendungen oder das Verschweissen mit Titanlegierungen für Anwendungen in der Luftfahrt. Der Plattierwerkstoff kann aber beispielsweise für Wärmetauscheranwendungen und Elektroinstallationen auch aus Kupfer bestehen.

Bei vorgegebenem Grundwerkstoff für den Bolzen 18 wird ein gegenüber dem Grundwerkstoff weicherer Plattierwerkstoff gewählt.

## Patentansprüche

1. Verfahren zum Aufbringen eines Plattierwerkstoffes aus Metall als Plattierschicht (24) auf die Oberfläche eines Profils (22) aus einer Aluminiumlegierung als Grundwerkstoff,
**dadurch gekennzeichnet, dass**
ein Bolzen (18) aus dem Grundwerkstoff und vor dem Bolzen (18) eine im wesentlichen den gleichen Querschnitt wie der Bolzen (18) aufweisende Scheibe (20) aus dem Plattierwerkstoff in den Rezipienten (10) einer Strangpresse eingeführt und der Bolzen (18) aus dem Grundwerkstoff zusammen mit der vorgelagerten Scheibe (20) aus dem Plattierwerkstoff durch die Öffnung (13) einer Matrize (12) zu einem plattierten Profil (26) verpresst wird.

2. Verfahren nach Anspruch 1, **dadurch gekennzeichnet, dass** der Grundwerkstoff aus einer lithiumhaltigen Aluminiumlegierung und der Plattierwerkstoff aus Reinaluminium oder einer lithiumfreien Aluminiumlegierung besteht.

3. Verfahren nach Anspruch 2, **dadurch gekennzeichnet, dass** das plattierte Profil (26) in der Luftfahrt verwendet wird.

4. Verfahren nach Anspruch 3, **dadurch gekennzeichnet, dass** das plattierte Profil (26) als Stringer zur Versteifung der Aussenhaut bei Flugzeugen verwendet wird.
